**Europäisches Patentamt**

**European Patent Office**

**Office européen des brevets**

(19)

(11) Veröffentlichungsnummer: **0 006 141**
**B1**

(12) # EUROPÄISCHE PATENTSCHRIFT

(45) Veröffentlichungstag der Patentschrift:
**20.01.82**

(21) Anmeldenummer: **79101568.8**

(22) Anmeldetag: **22.05.79**

(51) Int. Cl.³: **G 03 B 27/62**, G 03 B 27/54, G 03 G 15/04

(54) **Vorrichtung zur Anordnung einer eine Druckvorlage aufnehmenden, antreibbaren Walze einer Formulardruckeinrichtung in einem Kopier- oder Druckgerät.**

(30) Priorität: **16.06.78 DE 2826530**

(43) Veröffentlichungstag der Anmeldung:
**09.01.80 Patentblatt 80/1**

(45) Bekanntmachung des Hinweises auf die Patenterteilung:
**20.01.82 Patentblatt 82/3**

(84) Benannte Vertragsstaaten:
**AT BE CH FR GB IT NL**

(56) Entgegenhaltungen:
**DE-A-2 136 138**
**DE-A-2 616 137**
**DE-B-1 145 923**
**US-A-3 316 826**
**Siemens Review, Band 44, Heft 12, 1977 München, H. Unger «3352 Laser Printer with High Printing Rate», Seiten 539 bis 541**

(73) Patentinhaber: **SIEMENS AKTIENGESELLSCHAFT Berlin und München, Postfach 22 02 61, D-8000 München 22 (DE)**

(72) Erfinder: **Zoeke, Siegfried, Balanstrasse 77, D-8000 München 90 (DE)**

Vorrichtung zur Anordnung einer eine Druckvorlage aufnehmenden antreibbaren Walze
einer Formulardruckeinrichtung in einem Kopier- oder Druckgerät

Die Erfindung bezieht sich auf eine Vorrichtung zur Anordnung einer eine Druckvorlage aufnehmenden antreibbaren Walze einer Formulardruckeinrichtung in einem Kopier- oder Druckgerät, bei der die Formulardruckeinrichtung ein am Gehäuse des Gerätes gelagertes Lampenrohr und die auf das Lampenrohr aufschiebbare und arretierbare Walze enthält.

Nichtmechanische, nach dem elektrostatischen Prinzip arbeitende Drucker sind bereits bekannt. Sie erzeugen entweder elektrofotografisch oder elektrografisch Ladungsbilder der zu druckenden Zeichen auf einem Aufzeichnungsträger. Der Aufzeichnungsträger kann das zu bedruckende Papier selbst sein oder ein Zwischenträger. Die Ladungsbilder auf dem Aufzeichnungsträger werden mit Hilfe des sogenannten Toners entwickelt. Wird als Aufzeichnungsträger das zu bedruckende Papier selbst verwendet, dann folgt unmittelbar auf die Entwicklungseinrichtung die sogenannte Fixiereinrichtung, durch die das entwickelte Ladungsbild auf dem Papier, z.B. mit Wärme, fixiert wird. Wird jedoch beim nichtmechanischen Druck ein Zwischenträger verwendet, z.B. eine xerografische Trommel, dann werden die entwickelten Ladungsbilder auf das zu bedruckende Papier umgedruckt und erst anschliessend fixiert.

Bei solchen elektrostatischen Druckern besteht der Wunsch, zum Zeitpunkt der Erzeugung der Ladungsbilder der zu druckenden Zeichen auf dem Aufzeichnungsträger die Ladungsbilder von zu druckenden Formularen zu erstellen. Dabei ist es notwendig, dass die Erzeugung der Ladungsbilder unabhängig ist von der Zeichenerzeugung der zu druckenden Zeichen auf dem Aufzeichnungsträger.

Ein Beispiel einer solchen Formulardruckeinrichtung ergibt sich aus der DE-OS 2 616 137. Hier wird auf einer transparenten Walze ein Negativ des zu druckenden Formulares aufgebracht. Dieses Negativ wird im folgenden Druckvorlage genannt. Innerhalb der transparenten Walze ist eine Lichtquelle, z.B. eine Leuchtstoffröhre, angeordnet. Diese belichtet die Walze von innen und damit auch die Druckvorlage. Das von der Druckvorlage ausgehende Licht wird durch eine Blende abschnittsweise auf dem Aufzeichnungsträger abgebildet. Die Walze wird mittels eines Zahnradantriebs synchron mit dem Aufzeichnungsträger transportiert. Da Formulare verschiedener Grösse auf dem Aufzeichnungsträger abgebildet werden müssen, sind auch Walzen verschiedenen Umfangs erforderlich. Das heisst, die Walzen müssen so in dem Druckgerät angeordnet sein, dass sie leicht ausgewechselt werden können.

Die der Erfindung zugrundeliegende Aufgabe besteht darin, eine Vorrichtung anzugeben, durch die das Auswechseln der Walze auf einfache Weise möglich ist. Diese Aufgabe wird dadurch gelöst, dass die Walze aus einem Zylinder und zwei Walzenaufnahmeflanschen besteht, dass das Lampenrohr an das Gehäuse anschwenkbar und von diesem abschwenkbar ist, dass der eine Walzenaufnahmeflansch an seinem Umfang eine Nut hat und dass an dem Gehäuse eine Zentrierrolle drehbar angeordnet ist, die beim Anschwenkvorgang des Lampenrohres und damit der Walze in die Nut des einen Walzenaufnahmeflansches eingreift und dadurch die Walze zentriert.

Vorzugsweise wird die Antriebseinrichtung aus einem am Gehäuse gelagerten Antriebszahnrad bestehen, das in eine Verzahnung eingreift, die in einem der Walzenaufnahmeflansche angeordnet ist. Dabei ist es zweckmässig, die Zentrierrolle und das Antriebszahnrad nebeneinander auf einer im Gehäuse gelagerten Welle anzuordnen. Dann liegen auf dem einen Walzenaufnahmeflansch die Nut für die Zentrierrolle und die Verzahnung für das Antriebszahnrad direkt nebeneinander.

Eine einfache Halterung der Walze auf dem Lampenrohr kann dann erreicht werden, wenn das Lampenrohr auf seiner einen Seite in einer Lagerbuchse befestigt ist. Die Lagerbuchse hat auf ihrer Innenseite eine Ausdrehung, in der ein Lager, z.B. Kugellager, angeordnet ist. Der eine Walzenaufnahmeflansch läuft dementsprechend nach aussen in einer Hülse aus. Beim Aufbringen der Walze auf dem Lampenrohr wird dann die Hülse unterhalb des Lagers in die Ausdrehung hineingeschoben.

Eine Lagerung der Walze auf ihrer anderen Seite erhält man auf einfache Weise dadurch, dass auf dem Lampenrohr ein weigeres Lager, z.B. ein Rollenlager, angeordnet ist, auf der der andere Walzenaufnahmeflansch im eingeschobenen Zustand der Walze aufliegt. Dann muss die Walze keine besonderen Lager enthalten.

Die Zentrierrolle ist zweckmässigerweise konisch aufgebaut. Entsprechend wird dann die Nut in dem einen Walzenaufnahmeflansch eine konische Form haben. Damit wird das Eingreifen der Zentrierrolle in die Nut erleichtert und die Zentrierrolle schiebt die Walze in die richtige Position.

Die erfindungsgemässe Vorrichtung hat folgende Vorteile: Bei einem Wechsel der Druckvorlage muss die zugeordnete Walze nur auf das Lampenrohr aufgesteckt werden. Beim Anschwenken an das Antriebszahnrad wird die Walze durch die Zentrierrolle zwangsweise, ohne zusätzliche Handgriffe, in die richtige Arbeitsposition gezogen.

Die Zentrierrolle übernimmt nach dem Anschwenken auch die Sicherung der Walze gegen seitliches Verschieben. Ausserdem wird verhindert, dass auftretende Längenänderungen der Walze durch Wärmeeinwirkung Einfluss auf die erste Schreibstelle haben. Die erste Schreibstelle liegt dabei auf der Seite der Walze, die der Zentrierrolle zugeordnet ist.

Die automatische Zentrierung und Sicherung der Walze mit Hilfe der Zentrierrolle bringt somit eine wesentliche Vereinfachung der Handhabung. Bedienungsfehler sind ausgeschlossen, da der Antrieb nur bei angeschwenkter Walze wirksam werden kann. Wird die Walze nur so ungenau aufgeschoben, dass die Zentrierung noch nicht arbeitet, dann wird das Anschwenken verhindert.

Da die Lager einerseits auf dem Lampenrohr, anderseits in der Lagerbuchse für das Lampenrohr angeordnet sind, muss die Walze keine eigenen Lager enthalten. Damit wird der Aufbau der Walze vereinfacht und verbilligt und es kann das Gewicht der Walze erheblich verringert werden.

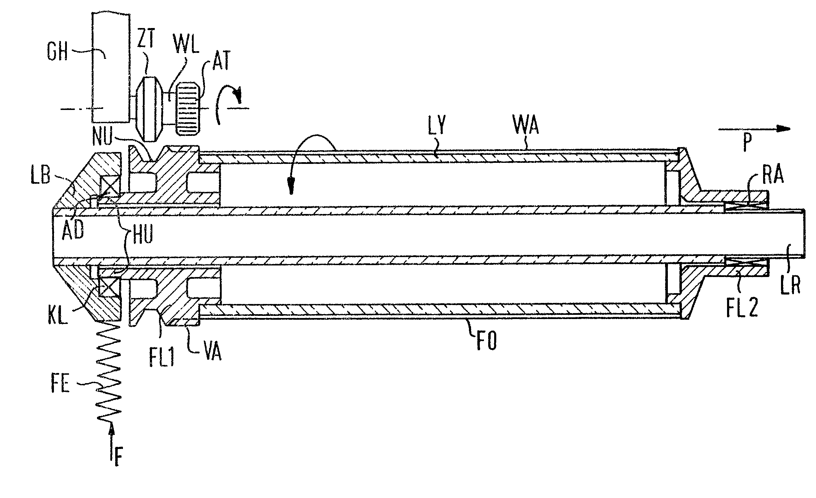

Anhand eines Ausführungsbeispieles, das in der Figur dargestellt ist, wird die Erfindung weiter erläutert.

In der Figur ist vom Druckgerät nur ein Teil des Gehäuses GH gezeigt. Die Darstellung anderer Teile des Druckgerätes erübrigt sich, da sie für die Erklärung der Erfindung nicht erforderlich ist.

In dem Gehäuse GH ist eine Welle WL drehbar gelagert. Auf ihr ist eine Zentrierrolle ZT und ein Antriebszahnrad AT angeordnet. Die Zentrierrolle ZT hat eine konische Form.

An dem Gehäuse GH soll nun eine Walze WA gelagert werden. Sie besteht aus einem transparenten Zylinder LY und zwei Walzenaufnahmeflanschen FL1 und FL2. Auf dem Transparenten Zylinder LY kann eine Druckvorlage FO angeordnet werden. Er ist zwischen den zwei Walzenaufnahmeflanschen FL1 und FL2 befestigt. Zum Beispiel kann er auf Stegen der Walzenaufnahmeflanschen FL1 und FL2 aufgeklebt sein.

Der eine Walzenaufnahmeflansch FL1 ist an seinem Umfang mit einer Nut NU versehen. Diese Nut hat ebenfalls eine konische Form. Neben der Nut NU ist auf der Oberfläche des einen Walzenaufnahmeflansches FL1 eine Verzahnung VA angeordnet. Die Verzahnung endet kurz vor der Nut.

Im Betrieb muss die Walze WA auf ein Lampenrohr LR aufgeschoben werden. Das Lampenrohr ist daher auf seiner einen Seite in einer Lagerbuchse LB befestigt. Diese Lagerbuchse hat auf ihrer Innenseite eine Ausdrehung AD, in der ein Kugellager KL angeordnet ist. Zwischen dem Kugellager KL und dem Lampenrohr LR besteht jedoch nocht ein Spalt. In diesen Spalt wird die Walze WA mit ihrem einen Walzenaufnahmeflansch FL1 hineingeschoben. Dazu endet der Walzenaufnahmeflansch FL1 in einer Hülse HU.

Auf dem anderen Ende des Lampenrohres LR ist ein weiteres Lager RA, z.B. ein Rollenlager, vorgesehen. Dieses ist so angeordnet, dass der andere Walzenaufnahmeflansch FL2 im eingeschobenen Zustand der Walze WA auf diesem Lager RA aufliegt.

Das Lampenrohr LR, und zwar die Lagerbuchse LB, wird mit Hilfe einer Federkraft F an das Gehäuse GH angedrückt. Dies ist in der Figur nur prinzipiell durch eine Feder FE dargestellt, da der An- bzw. Abschwenkmechanismus für das Lampenrohr LR nicht Gegenstand der Erfindung ist.

Das Befestigen der Walze WA in dem Drucker erfolgt auf folgende Weise: Zunächst wird das Lampenrohr LR von dem Gehäuse GH abgeschwenkt. Anschliessend wird die Walze WA auf das Lampenrohr LR aufgeschoben. Die Hülse HU gelangt dabei unter das Kugellager KL. Damit ist der eine Walzenaufnahmeflansch FL1 drehbar auf dem Lampenrohr gelagert. Der andere Walzenaufnahmeflansch FL2 liegt in dieser Lage auf dem Rollenlager RA auf. Er ist somit ebenfalls drehbar auf dem Lampenrohr RL angeordnet. Nun wird das Lampenrohr LR an das Gehäuse GH angeschwenkt. Dabei greift die Zentrierrolle ZT in die Nut NU des einen Walzenaufnahmeflansches FL1 ein. Durch die konische Ausbildung der Zentrierrolle ZT und der Nut NU wird erreicht, dass die Zentrierrolle ZT die Walze WA in die richtige Position zieht. Dabei greift das Antriebszahnrad AT in die Antriebsverzahnung VA des einen Walzenaufnahmeflansches FL1 ein. Damit ist die Lagerung der Walze WA im Druckgerät beendet.

Soll die Walze WA ausgewechselt werden, dann wird das Lampenrohr LR entgegen der Federkraft F von dem Gehäuse GH abgeschwenkt.

Die Zentrierrolle ZT und das Antriebszahnrad AT lösen sich von der Walze WA. Die Walze kann nun in Richtung des Pfeiles P von dem Lampenrohr RL abgehoben werden. Eine zusätzliche Verriegelung muss somit nicht gelöst werden.

Bezugszeichenliste

GH   Gehäuse
WL   Welle
ZT   Zentrierrolle
AT   Antriebszahnrad
WA   Walze
LY   Zylinder
FO   Druckvorlage
FL1   Erster Walzenaufnahmeflansch
FL2   Zweiter Walzenaufnahmeflansch
HU   Hülse
NU   Nut
VA   Verzahnung
LR   Lampenrohr
LB   Lagerbuchse
AD   Ausdrehung
KL   Lager
RA   Lager
FE   Feder
F   Federkraft
P   Auswechselrichtung der Walze

**Patentansprüche**

1. Vorrichtung zur Anordnung einer, eine Druckvorlage aufnehmenden antreibbaren Walze einer Formulardruckeinrichtung in einem Kopier- oder Druckgerät, bei der die Formulardruckeinrichtung ein am Gehäuse des Gerätes gelagertes Lampenrohr und die auf das Lampenrohr aufschiebbare und arretierbare Walze enthält, dadurch gekennzeichnet, dass die Walze (WA) aus einem Zylinder (LY) und zwei Walzenaufnahmeflanschen (FL1, FL2) besteht, dass das Lampenrohr (LR) an das Gehäuse (GH) des Gerätes anschwenkbar und von diesem abschwenkbar ist, dass der eine Walzenaufnahmeflansch (FL1) an seinem Umfang eine Nut (NU) hat und dass an dem Gehäuse (GH) eine Zentrierrolle (ZT) drehbar angeordnet ist, die beim Anschwenkvorgang des Lampenrohres und damit der Walze in die Nut (NU) des einen Walzenaufnahmeflansches eingreift und dadurch die Walze (WA) zentriert.

2. Vorrichtung nach Anspruch 1, dadurch gekennzeichnet, dass die Antriebseinrichtung ein am Gehäuse (GH) gelagertes Antriebszahnrad (AT) enthält, das in eine an einem der Walzenaufnahmeflansche (FL1, FL2) angeordnete Verzahnung (VA) eingreift.

3. Vorrichtung nach Anspruch 2, dadurch gekennzeichnet, dass die Zentrierrolle (ZT) und das Antriebszahnrad nebeneinander auf einer im Gehäuse (GH) gelagerten Welle (WL) angeordnet sind, und dass die Nut (NU) und die Verzahnung (VA) auf dem einen Walzenaufnahmeflansch (FL1) liegen.

4. Vorrichtung nach einem der vorhergehenden Ansprüche, dadurch gekennzeichnet, dass das Lampenrohr (LR) auf seiner einen Seite in einer Lagerbuchse (LB) gehaltert ist, dass die Lagerbuchse auf seiner Innenseite eine Ausdrehung (AD) hat, dass in der Ausdrehung ein Lager (KL) angeordnet ist, und dass der eine Walzenaufnahmeflansch (FL1) nach aussen in einer Hülse (HU) ausläuft, die beim Aufbringen der Walze (WA) auf dem Lampenrohr (RL) unter das Lager (KL) in die Ausdrehung (AD) hinein einschiebbar ist.

5. Vorrichtung nach einem der vorhergehenden Ansprüche, dadurch gekennzeichnet, dass im Bereich des anderen Walzenaufnahmeflansches (FL2) bei eingeschobener Walze (WA) auf dem Lampenrohr (LR) ein weiteres Lager (RA) angeordnet ist, auf dem der andere Walzenaufnahmeflansch im eingeschobenen Zustand aufliegt.

6. Vorrichtung nach einem der vorhergehenden Ansprüche, dadurch gekennzeichnet, dass die Zentrierrolle (ZT) und die Nut (NU) eine konische Form haben.

## Claims

1. Device for the arrangement of a drivable roll, which accomodates a manuscript, of a form printing device in a copier or printer, wherein the form printing device contains a tubular lamp which is mounted on the housing of the apparatus and the roll which can be pushed and locked on to the tubular lamp, characterised in that the roll (WA) consists of a cylinder (LY) and two roll receiving flanges (FL1, FL2), that the tubular lamp (LR) can be pivoted towards and away from the housing (GH) of the apparatus, that one roll receiving flange (FL1 exhibits a groove (NU) at its periphery, that a centring roller (ZT) is rotatably mounted on the housing (GH) which roller engages into the groove (NU) in the one roll receiving flange during the pivoting of the tubular lamp and thus of the roll towards the housing, and thereby centres the foll (WA).

2. Device a claimed in claim 1, characterised in that the drive device contains a drive gear (AT) which is mounted on the housing (GH) and which engages into geartoothing (VA) arranged on one of the roll receiving flanges (FL1, FL2).

3. Device as claimed in claim 2, characterised in that the centring roller (ZT) and the drive gear are arranged adjacent one another on a shaft (WL) which is mounted in the housing (GH), and that the groove (NU) and the gear-toothing system (VA) are arranged on the one roll, receiving flange (FL1).

4. Device as claimed in one of the preceding claims, characterised in that the tubular lamp (LR) is mounted on one side in a bearing bush (LB), that the bearing bush exhibits a recess (AD) on its inner side, that a bearing (KL) is arranged in the recess, and that the exterior of the one roll receiving flange (FL1) terminates in a sleeve (HU) which, when the roll (WA) is applied to the tubular lamp (LR), can be inserted within the bearing (KL) into the recess (AD).

5. Device as claimed in one of the preceding claims, characterised in that in the region of the other roll receiving flange (FL2), when the roll (WA) is inserted on the tubular lamp (LR) there is arranged a further bearing (RA) on which the other roll receiving flange rests in the inserted state.

6. Device as claimed in one of the preceding claims, characterised in that the centring roller (ZT) and the groove (NU) have a conical section.

## Revendications

1. Dispositif de mise en place d'un rouleau, qui peut être entraîné et qui reçoit un original imprimé, d'un dispositif d'impression de formulaires d'une imprimante ou d'une installation de reprographie, dans lequel le dispositif d'impression de formulaires comprend un tube lumineux, qui est monté sur le bâti de l'installation et un cylindre, qui peut coulisser sur le tube lumineux et qui peut être bloqué, caractérisé en ce que le rouleau (WA) est constitué d'un cylindre (LY) et de deux moyeux flasques (FL1, FL2), le tube (LR) lumineux peut se rapprocher at s'éloigner du bâti (GH) de l'installation en pivotant, l'un des moyeux-flasques (FL1) a une gorge (NU) à la périphérie et sur le bâti (GH) est monté à rotation un galet (ZT) de centrage, qui, lors du rapprochement du tube lumineux et donc du rouleau, s'engage dans la gorge (NU) de ce moyen-flasque et ainsi centre le rouleau (WA).

2. Dispositif suivant la revendication 1, caractérisé en ce que le dispositif d'entraînement comprend une roue (AT) dentée d'entraînement, qui est montée sur le bâti (GH) et qui entrène dans une denture (VA) disposée sur l'un des moyeux-flasques (FL1, FL2).

3. Dispositif suivant la revendication 2, caractérisé en ce que le galet (ZT) de centrage et la roue denté d'entraînement sont disposés l'un à côté de l'autre sur un arbre (WL) monté sur le bâti (GH) et la gorge (NU) et la denture (VA) sont sur le même moyeu-flasque (FL1).

4. Dispositif suivant l'une des revendications précédentes, caractérisé en ce que le tube (LR) lumineux est supporté par l'une de ses extrémités dans un coussinet (LB), lequel présente sur la face intérieure un alésage (AD) dans lequel est logé un palier (KL) et l'un des moyeux-flasques (FL1) se termine en une douille (HU) qui, lors de la mise en place du rouleau (WA) sur le tube (LR) lumineux, peut coulisser vers l'intérieur sous le palier (KL) de l'alésage (AD).

5. Dispositif suivant l'une des revendications précédentes, caractérisé en ce que dans la région de l'autre moyeu-flasque (FL2) il y a, lorsque le rouleau (WA) est engagé sur le tube (LR) lumineux, un autre palier (RA) sur lequel l'autre moyeu-flasque repose lorsque le rouleau est engagé sur le tube (LR) lumineux.

6. Dispositif suivant l'une des revendications précédentes, caractérisé en ce que le galet (ZT) de centrage et la gorge (NU) ont une forme conique.